(19) Europäisches Patentamt
European Patent Office
Office européen des brevets

(11) **EP 4 083 177 B1**

(12) **EUROPEAN PATENT SPECIFICATION**

(45) Date of publication and mention
of the grant of the patent:
**06.05.2026  Bulletin 2026/19**

(21) Application number: **20906426.0**

(22) Date of filing: **02.12.2020**

(51) International Patent Classification (IPC):
*C12G 3/04* (2019.01)      *C12G 3/06* (2006.01)
*A23L 2/52* (2006.01)

(52) Cooperative Patent Classification (CPC):
**C12G 3/06; A23L 2/52; A23L 2/62; A23L 27/12;
A23L 27/80; A23L 33/115**

(86) International application number:
**PCT/JP2020/044828**

(87) International publication number:
**WO 2021/131551 (01.07.2021 Gazette 2021/26)**

(54) **BEVERAGE CONTAINING DISPERSED PLANT OIL**

GETRÄNK, DAS DISPERGIERTE PFLANZENÖLE ENTHÄLT

BOISSON CONTENANT UNE HUILE VÉGÉTALE DISPERSÉE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **27.12.2019   JP 2019239584**

(43) Date of publication of application:
**02.11.2022   Bulletin 2022/44**

(73) Proprietor: **Suntory Holdings Limited
Osaka 530-8203 (JP)**

(72) Inventors:
• **TAMAOKA, Kuniyasu
Kawasaki-shi, Kanagawa 211-0067 (JP)**
• **YOSHIHIRO, Akira
Kawasaki-shi, Kanagawa 211-0067 (JP)**

(74) Representative: **Vossius & Partner
Patentanwälte Rechtsanwälte mbB
Siebertstraße 3
81675 München (DE)**

(56) References cited:
**WO-A1-2015/156244      CN-B- 105 410 849
JP-A- 2004 210 957      JP-A- 2005 193 134
JP-A- 2005 247 759      JP-A- 2013 005 781
JP-A- 2019 037 210      JP-A- H10 505 865
JP-B2- 5 881 321        US-A1- 2007 141 203
US-A1- 2013 101 724     US-A1- 2019 100 655**

• **DATABASE GNPD 15 March 2012 (2012-03-15),
LAMEIZI FOODS: "Licorice Sour Plum Juice",
XP055837878, retrieved from Mintel Database
accession no. 1741775**
• **DATABASE GNPD 13 February 2019
(2019-02-13), COCA-COLA, JAPAN: "Aromatic
Blend Coffee", XP055837881, retrieved from
Mintel Database accession no. 6339371**

**Description**

TECHNICAL FIELD

The present invention relates to a beverage, beverage base, raw material liquor or flavoring comprising a dispersed plant oil, or methods for producing the same.

BACKGROUND ART

There are various types of beverages comprising a dispersed oil. In many of those beverages, an emulsifier is used for stabilizing a dispersed oil. For example, PTL 1 discloses that decaglyceryl oleate and the like can be used as emulsifiers. PTL 2 discloses a nano emulsion comprising citral (main component of citrus fruit's peel oil) and an oil phase which is dimethyl silicone oil, prepared by high-pressure homogenization, and PTL 3 discloses an oil-in-water emulsified fragrance composition comprising an oil phase containing 0.5-30 wt.% of fragrance and silicone oil and an aqueous phase containing a hydrophilic surfactant and water, wherein the average particle size in the emulsion is 10-200 nm. Meanwhile, NPTL1 discloses a beverage comprising emulsified silicone oil and orange peel, which includes limonene, and NPTL 2 discloses a coffee beverage comprising coffee oil and silicone.

CITATION LIST

PATENT LITERATURES

PTL 1: Japanese Unexamined Patent Application Publication No. JP 2014-108104
PTL 2: CN 105 410 849 B
PTL 3: JP 2005-247759 A

NON-PATENT LITERATURES

NPTL 1: Lameizi Foods, "Licorice Sour Plum Juice"
NPTL 2: Coca-Cola, Japan: "Aromatic Blend Coffee"

SUMMARY OF INVENTION

TECHNICAL PROBLEM

It has been considered that during the process of dispersing a plant oil in a beverage, it is important to use an emulsifier for the purpose of preventing coalescence or separation of the oil in the beverage. However, emulsifiers have peculiar taste and thus sometimes may impart unpleasant taste to beverages.
Therefore, one of the objects of the present invention is to provide a technique that can stabilize plant oil microparticles dispersed in a beverage even with little use of an emulsifier.

SOLUTION TO PROBLEM

As a result of intensive studies, the present inventors found that when a silicone oil is used in a beverage comprising a dispersed plant oil, the stability of the dispersed plant oil microparticles can be enhanced even with little use of an emulsifier.
The present invention is as defined in the appended claims.

ADVANTAGEOUS EFFECTS OF INVENTION

In the beverage, beverage base, raw material liquor, or flavoring of the present invention, microparticles of a plant oil contained therein are stabilized and prevented from coalescing in the liquid or separating from the water phase. This effect is of significance because the separation of the plant oil causes significant deterioration of the appearance of the beverage.

Further, when the size of microparticles of a plant oil is adjusted, the beverage of the present invention becomes less cloudy while containing the microparticles of the plant oil. Thus, the appearance of the beverage becomes more acceptable to consumers. A less cloudy appearance of a beverage offers further advantages to the beverage. First, there is no need for a cryofiltration step for ensuring clarity. Since it takes a specified time to take a cryofiltration step, eliminating the need for this step provides benefits in terms of productivity and cost. Further, filtration may not only remove unnecessary components, but also may even remove necessary aroma or fragrance components. Thus, when a cryofiltration step is eliminated, the aroma or fragrance of a produced beverage can be enhanced.

DESCRIPTION OF EMBODIMENTS

The following will first describe the beverage of the present invention, and then describe the beverage base, raw material liquor, flavoring, and methods related thereto according to this invention.

As used herein, the units ppm and ppb are expressed on a volume per weight basis, and are synonymous with mg/L and μg/L, respectively.

(Beverage)

The beverage of the present invention comprises a silicone oil, a plant oil and water. In the beverage of this invention, the plant oil is dispersed and present in the form of microparticles. The beverage of this invention in many cases contains water as a main component, but in some cases may contain ethanol as a main component.

(Silicone oil)

The silicone oil as used in the present invention refers to a polysiloxane with organic chains and having an oily nature. Examples of silicone oils include, but are not limited to, dimethylpolysiloxane and methylphenylpolysiloxane. A preferred silicone oil is dimethylpolysiloxane. The molecular weight of a silicone oil is not particularly limited, and is typically in the range of from 1000 to 16500 Da, from 1500 to 16000 Da, or from 2000 to 15500 Da. The molecular weight of a silicone oil is measured by, for example, gel permeation chromatography. The beverage of this invention may comprise one type of silicone oil alone or may also comprise two or more types of silicone oils.

The content of a silicone oil in the beverage of the present invention is not particularly limited, and is preferably in the range of from 0.0001 to 100 ppm, more preferably from 0.0001 to 50 ppm, still more preferably from 0.001 to 50 ppm, yet more preferably from 0.01 to 10 ppm, further more preferably from 0.05 to 5 ppm. Another preferred exemplary content of a silicone oil is in the range of from 0.0001 to 25 ppm, from 0.0001 to 12.5 ppm, or from 0.0001 to 0.01 ppm. Since the beverage of this invention may also comprise two or more types of silicone oils, the silicone oil content, as referred to herein, refers to a total amount of silicone oils present in the beverage. In some embodiment of this invention, the silicone oil may be limited to specified types of silicone oils. In such an embodiment, the silicone oil content refers to a total amount of such specified types of silicone oils.

The content of a silicone oil can be measured using a known method such as HPLC. In order to adjust the silicone oil content, it is advised to adjust the amount of a silicone oil *per se* or the amount of a source material comprising a silicone oil.

(Plant oil)

The "plant oil" as referred to herein refers to an oily liquid derived from a plant, and includes essential oils and plant oils and fats. The beverage of the present invention may comprise one type of plant oil alone or may also comprise two or more types of plant oils.

The "essential oil" as referred to herein refers to a volatile oil produced from a plant. The essential oil has a fragrance unique to the plant from which said oil is produced. The essential oil can be obtained from a plant by means of, for example, steam distillation, hot water distillation (direct distillation), or cold-press extraction. The essential oil contains volatile aroma components such as terpene hydrocarbons, alcohols, and aldehydes.

The origin of an essential oil is not limited as long as it is derived from a plant source. Examples of plant sources include: different fruits, such as citrus fruits (*e.g.*, orange, *Citrus unshiu,* grapefruit, lemon, lime, *Citrus junos, Citrus iyo, Citrus natsudaidai, Citrus hassaku, Citrus reticulata* var *poonensis, Citrus depressa, Citrus sphaerocarpa*), grape, peach, pineapple, guava, banana, mango, acerola, lychee, papaya, passion fruit, Japanese apricot, Japanese pear, apricot, Japanese plum, berries, kiwi fruit, strawberry, and melon, or their fruit peels; and coffee beans. A preferred essential oil is an essential oil obtained from a citrus fruit peel, particularly preferably an oil (lemon oil) obtained from a lemon peel. One type of essential oil may be used alone, or two or more types of essential oils may be used in combination.

The "plant oil and fat" as referred to herein refers to an ester of fatty acids and glycerol as produced from a plant.

Examples of plant oils and fats include sesame oil, olive oil, soybean oil, canola oil, corn oil, rice germ oil, sunflower seed oil, camellia oil, linseed oil, avocado oil, perilla oil, safflower oil, mustard oil, almond oil, peanut oil, hazelnut oil, walnut oil, grapeseed oil, and coconut oil. One type of plant oil and fat may be used alone, or two or more types of plant oils and fats may be used in combination.

The content of a plant oil in the beverage of the present invention is not particularly limited, and is preferably in the range of from 0.00002 to 6 w/v%, more preferably from 0.00005 to 4 w/v%, still more preferably from 0.0001 to 2 w/v%. Since the beverage of this invention may comprise two or more types of plant oils, the plant oil content, as referred to herein, refers to a total amount of plant oils present in the beverage. In some embodiment of this invention, the plant oil may be limited to specified types of silicone oils. In such an embodiment, the plant oil content refers to a total amount of such specified types of plant oils.

When the beverage of the present invention comprises an essential oil from a citrus fruit such as lemon, the content of the essential oil is greatly affected by the content of limonene which is a main constituent of a citrus essential oil. Therefore, in such a case, the content of limonene can also be used instead of the content of an essential oil. In such a case, the content of limonene in the beverage of this invention is not particularly limited, and is preferably in the range of from 0.01 to 15000 ppm, more preferably from 0.05 to 10000 ppm, still more preferably from 0.1 to 5000 ppm.

When the plant oil is present in too high amounts, the stability of microparticles may decrease. When the plant oil is present in too small amounts, the desired aroma may not be obtained.

The weight ratio of the content of a plant oil to that of a silicone oil in the beverage of the present invention is preferably in the range of from 1 to 325000, more preferably from 1.3 to 325000, still more preferably from 2 to 325000, yet more preferably from 2 to 32500, further more preferably from 10 to 3250. Another preferred exemplary weight ratio of the content of a plant oil to that of a silicone oil is in the range of from 2.6 to 325000.

The weight ratio of the content of a silicone oil to that of limonene is preferably in the range of from 0.2 to 67500, more preferably from 0.5 to 6750, still more preferably from 2 to 675.

The content of an essential oil in the beverage of the present invention can be measured using, for example, an essential oil quantification apparatus. For example, the content of an essential oil can be calculated by the following procedure: 100 mL of a beverage, 2 L of distilled water, and boiling stones are placed in a round flask with a condenser capable of trapping an essential oil, and the contents are heated and subjected to atmospheric distillation at about 100°C for one hour, and then the amount (g) of an essential oil collected in a trap tube is measured.

The content of limonene in the beverage of the present invention can be quantified by a known method -- for example, by following the procedure described below.

After a calibration curve has been made in advance using a limonene standard, a liquid composition as a beverage sample can be analyzed by gas chromatography with flame ionization detection (GCFID) under the conditions detailed below.

- Pre-analysis treatment: A sample is loaded onto an Extrelut NT-1 column and then extracted with ether.
- Analyzer: GC 6890N (produced by Agilent Technologies)
- Column: HP-ULTRA 2 (ID: 0.32 mm, length: 50 m, film thickness: 0.52 $\mu$m)
- Carrier gas: Helium
- Flow rate: 2.2 mL/min.
- Inlet: Splitless
- Inlet temperature: 250°C
- Oven temperature: Initiated at 45°C (1.5 min.), then increased at 5°C/min., and held at 230°C (2 min.)
- Detector: FID
- Detector temperature: 260°C
- Injection volume: 2.0 $\mu$L.

The content of oils and fats in the beverage of the present invention can be measured according to, for example, the ether extraction method as disclosed in "On Analysis Methods, etc. for Nutrients, etc. Listed in the Nutrition Labelling Standards" (Eishin Notice No. 13 issued on April 26, 1999).

In order to adjust the plant oil content in the beverage, it is advised to adjust the amount of a plant oil *per se* to be used, or the amount of a source material comprising a plant oil.

(Plant oil microparticles)

Plant oil microparticles are based on a plant oil, but may contain other components. The typical content of a plant oil in microparticles is in the range of from 60 to 100 w/w%, from 70 to 100 w/w%, from 80 to 100 w/w%, from 90 to 100 w/w%, from 95 to 100 w/w%, or from 99 to 100 w/w%.

The plant oil microparticles dispersed in the beverage of the present invention have an average particle size of from 30 to 500 nm, preferably from 40 to 400 nm, more preferably from 50 to 300 nm, yet more preferably from 60 to 250 nm, further more preferably from 70 to 240 nm. The average particle size value of the microparticles is greater than a value of three times, preferably four times, more preferably five times, yet more preferably six times, as much as the standard deviation of the particle size of the microparticles. The particle size of microparticles can be measured using a dynamic light scattering method.

It is considered that when the particle size of plant oil microparticles is so small as mentioned above and the standard deviation is small (*i.e.,* the variance is low), the stability of the microparticles becomes much higher.

(Emulsifier)

The content of an emulsifier in the beverage of the present invention is preferably as low as possible, more preferably zero. The range of such a low content is not more than 5 ppm, for example, not more than 1 ppm, or not more than 100 ppb, in total. In this invention, plant oil microparticles can be stabilized despite the low content of an emulsifier.

The term "emulsifier" as referred to herein refers to a substance that is known to be used as an emulsifier. In the context of this invention, the silicone oil used in the present invention is not regarded as being included in the category of "emulsifier".

The type of the "emulsifier" as referred to herein is not particularly limited as long as it is edible. Examples of emulsifiers include, but are not limited to, Enju (*Styphnolobium japonicum*) saponins, barley husk extracts, soap bark (*Quillaja saponaria*) extracts, glycerol esters of fatty acids, polyglycerol esters of fatty acids, enzymatically modified soybean saponins, enzymatically modified lecithin, vegetable sterols, vegetable lecithin, sphingolipids, sucrose esters of fatty acids, calcium stearoyl lactylate, sorbitan esters of fatty acids, polyoxyethylene sorbitan esters of fatty acids, soybean saponins, powdered bile, tea (*Camellia sinensis*) seed saponins, animal sterols, tomato glucolipids, beet saponins, propylene glycol esters of fatty acids, fractionated lecithin, Yucca foam extract, yolk lecithin, gum arabic, curdlan, carrageenan, CMC (carboxymethylcellulose), locust bean gum, xanthan gum, Krantz aloe (*Aloe arborescens*) extract, chitin, chitosan, guar gum, glucosamine, yeast cell wall, psyllium seed gum, gellan gum, tamarind seed gum, tara gum, dammar resin, dextran, tragacanth gum, microfibrillated cellulose, pullulan, pectin, methyl cellulose, peach gum, rhamsan gum, and levan.

The content of an emulsifier can be quantified using a known method such as HPLC.

(Ethanol)

The beverage of the present invention may comprise ethanol. Ethanol may be incorporated in the beverage by any given means. For example, an alcohol material, which serves as a source of ethanol, may be incorporated in the beverage. Examples of alcohol materials that can be used include spirits (*e.g.*, rum, vodka, gin), whiskey, brandy, or shochu, with further examples being brewages (*e.g.*, beer, refined sake, fruit wine), law-malt beer, or mixed liquors (*e.g.*, synthetic refined sake, sweet fruit wine, liqueur). Such alcohol materials may each be used alone, or two or more thereof may be used in combination.

The ethanol content in the beverage of the present invention is preferably in the range of from 0 to 99 v/v%, more preferably from 0 to 80 v/v%, still more preferably from 0 to 70 v/v%. In the case where an emulsifier is used without use of a silicone oil, micelles are destroyed with an increase in alcohol content. However, such a disadvantage is unlikely to appear in this invention, because a silicone oil is used in this invention. Therefore, an ethanol-containing beverage is one of preferred embodiments of this invention. Another preferred exemplary ethanol content in the beverage of this invention is in the range of from 1 to 80 v/v%, from 5 to 80 v/v%, from 9 to 80 v/v%, or from 25 to 80 v/v%.

In the present specification, the ethanol content in the beverage can be measured by any known method -- for example, by a vibrational densimeter. To be specific, the beverage is filtered or sonicated to remove carbon dioxide gas, and the $CO_2$-free sample is distilled under direct fire. Then, the density at 15°C of the resulting distillate is measured and converted to an alcohol content according to Table 2 "Conversion among Alcohol Content, Density (15°C) and Specific Gravity (15/15°C)" which is annexed to the Official Analysis Method of the National Tax Agency in Japan (National Tax Agency Directive No. 6 in 2007, revised on June 22, 2007).

(Carbon dioxide gas)

The beverage of the present invention may comprise carbon dioxide gas. Carbon dioxide gas can be added to the beverage using a method commonly known to skilled artisans. As non-limiting examples of such a known method, carbon dioxide may be dissolved in a beverage under pressure; carbon dioxide and a beverage may be mixed in piping using a mixer such as a carbonator produced by Tuchenhagen GmbH; a beverage may be sprayed into a tank filled with carbon dioxide to cause the beverage to absorb carbon dioxide; or a beverage may be mixed with carbonated water. The pressure of carbon dioxide gas is adjusted using any suitable means as mentioned above.

The carbon dioxide gas pressure in the beverage of the present invention at a liquid temperature of 20°C is not particularly limited, and is preferably in the range of from 0.7 to 3.5 kgf/cm$^2$, more preferably from 0.8 to 2.8 kgf/cm$^2$. Also, the carbon dioxide gas pressure may be in the range of from 0.8 to 2.5 kgf/cm$^2$. In this invention, the carbon dioxide gas pressure can be measured using GVA-500A, a gas volume analyzer produced by Kyoto Electronics Manufacturing Co., Ltd. For example, with the sample temperature being adjusted to 20°C, a packaged beverage placed in the aforementioned gas volume analyzer is subjected to gas venting (snifting) and shaking, and then measured for carbon dioxide gas pressure. Unless otherwise specified herein, the carbon dioxide gas pressure refers to a carbon dioxide gas pressure at 20°C.

(Fruit juice)

The beverage of the present invention may contain a fruit juice. The form of a fruit juice is not limited regardless of its preparation method. For example, the fruit juice can be of any forms, including a straight fruit juice used as freshly squeezed from a fruit, or a concentrated fruit juice obtained by concentrating a straight fruit juice. Also, a clear fruit juice or a cloudy fruit juice may be used. Further, use may be made of a fruit juice from whole fruit, prepared by crushing the whole fruit including husk and simply removing particularly coarse solid matters like seeds, a fruit purée prepared by sieving a fruit, or a fruit juice obtained by crushing or extracting a dried fruit pulp.

The type of a fruit from which a fruit juice is derived is not particularly limited. Examples of fruit juices include, but are not limited to, juices from citrus fruits (*e.g.*, orange, *Citrus unshiu,* grapefruit, lemon, lime, *Citrus junos, Citrus iyo, Citrus sudachi, Citrus natsudaidai, Citrus hassaku, Citrus reticulata* var *poonensis, Citrus depressa, Citrus sphaerocarpa*), pomes (*e.g.,* apple, Japanese pear), drupes (*e.g.,* peach, Japanese apricot, apricot, Japanese plum, cherry), berries (*e.g.,* grape, blackcurrant, blueberry), tropical and subtropical fruits (*e.g.,* pineapple, guava, banana, mango, lychee), and fruity vegetables (*e.g.,* strawberry, melon, watermelon). One type of the aforementioned fruit juices may be used alone, or two or more types of them may be used in combination.

The content of a fruit juice in the beverage of the present invention is not particularly limited and is typically in the range of from 0.01 to 30 w/w%, from 0.01 to 20 w/w%, from 0.01 to 10 w/w%, or from 0.01 to 5 w/w%, in terms of percent fruit juice content.

In the present invention, the "percent fruit juice content" in a beverage shall be calculated according to the conversion expression mentioned below using the amount (g) of a fruit juice added to 100 g of a sample. Further, calculation of concentration factor shall be made as per the JAS guidelines, with the proviso that the sugar refractometer index for a sugar, honey, or the like added to a fruit juice is excluded.

Percent fruit juice content (w/w%) = <fruit juice amount added (g)> $\times$ <concentration factor> / 100 mL / <beverage's specific gravity> $\times$ 100

(Other components)

The beverage of the present invention may contain other components to the extent that such other components do not impair the effects of this invention. For example, the beverage of this invention may have added thereto various additives commonly used in beverages, such as vitamin, pigment, antioxidant, preservative, seasoning, essence, pH adjustor, and quality stabilizer, as long as such other components do not interfere with the effects of this invention.

(Flavoring)

The technique of the present invention can also be used for a flavoring. Therefore, in a certain aspect, this invention is directed to a flavoring comprising a silicone oil and a plant oil. The flavoring contains a dispersing medium such as ethanol. The plant oil is dispersed in the dispersing medium and present in the form of microparticles. When a beverage is produced using the flavoring as a source material for beverage, the flavoring provides plant oil microparticles stable in the beverage. The flavoring may also contain water.

The term "flavoring" as referred to herein refers to any substance used to add aroma, regardless of the definitions found in relevant laws, ordinances, regulations, etc. The type and intensity of aroma to be added are not limited. The definition of the "flavoring" includes not only those explicitly indicated as "flavorings", but also, for example, "e-extracts" provided by Nippon Funmatsu Yakuhin Co., Ltd.

The types and content ratio of components, and the average particle size and standard deviation of microparticles, as described above in relation to the beverage of the present invention, can also be applied to the flavoring of this invention. Preferred exemplary ranges of the contents of different components are as defined below.

A preferred exemplary range of the content of a plant oil in the flavoring of the present invention is in the range of from 0.02 to 60 w/v%, from 0.05 to 50 w/v%, or from 0.1 to 40 w/v%.

The content of limonene in the flavoring of the present invention is preferably in the range of from 0.01 to 15000 ppm, more preferably from 0.05 to 10000 ppm, still more preferably from 0.1 to 5000 ppm.

A preferred exemplary range of the content of a silicone oil in the flavoring of the present invention is in the range of from 0.1 to 25000 ppm, from 0.1 to 12500 ppm, from 1 to 12500 ppm, from 0.1 to 2500 ppm, or from 10 to 2500 ppm.

A preferred exemplary range of the ethanol content in the flavoring of the present invention is in the range of from 0 to 90 v/v%, from 0 to 80 v/v%, or from 0 to 70 v/v%.

The flavoring may contain some other alcohol as a dispersing medium, together with or instead of ethanol, or may contain some other dispersing medium acceptable as a food. For example, the flavoring may contain propylene glycol or glycerol. The content of such other alcohol can be adjusted, as appropriate, depending on the types of a flavoring and a plant oil. For example, the range of ethanol content as defined above in a previous paragraph can be employed as the content of such other alcohol.

The relative percentage of the flavoring to be incorporated in a beverage or a beverage base is preferably in the range of from 0.0001 to 10 w/v%, more preferably from 0.001 to 5 w/v%.

(Raw material liquor)

The technique of the present invention can also be used for a raw material liquor. Therefore, in a certain aspect, this invention is directed to a raw material liquor comprising a silicone oil and a plant oil. Since the raw material liquor is a type of liquors, the raw material liquor naturally contains ethanol. The plant oil is dispersed in ethanol and present in the form of microparticles. When a beverage is produced using the raw material liquor as a source material for beverage, the raw material liquor provides plant oil microparticles stable in the beverage. The raw material liquor may also contain water.

The term "raw material liquor" as referred to herein refers to a liquor added as a source material to an alcoholic beverage.

The types and content ratio of components, and the average particle size and standard deviation of microparticles, as described above in relation to the beverage of the present invention, can also be applied to the raw material liquor of this invention. Likewise, the contents of different components as described above in relation to the flavoring of this invention can also be applied to the raw material liquor of this invention.

The relative percentage of the raw material liquor to be incorporated in a beverage or a beverage base is preferably in the range of from 0.0001 to 20 w/v%, more preferably from 0.001 to 10 w/v%.

(Beverage base)

The technique of the present invention can also be used for a beverage base which is intended to be diluted before drinking. Therefore, in a certain aspect, this invention is directed to a beverage base comprising a silicone oil, a plant oil, and water. In the beverage base, the plant oil is dispersed and present in the form of microparticles. When a beverage is produced by diluting the beverage base, the beverage base provides plant oil microparticles stable in the beverage.

Examples of the beverage base of the present invention include beverages for use in cocktail preparation, and concentrated-type beverages. By diluting the beverage base of this invention, the beverage of this invention as described above can be prepared. The dilution factor is not limited as long as a beverage obtained by dilution satisfies the requirements for the beverage of this invention. Typically, the dilution factor is not less than 2 or 3 times and up to about 20 times, on a by-weight basis. The degree of dilution may be indicated on a product label. Specific examples of diluents include water, carbonic water, teas, and aqueous alcohol solutions (including liquors).

The types and content ratio of components, and the average particle size and standard deviation of microparticles, as described above in relation to the beverage of the present invention, can also be applied to the beverage base of this invention. Preferred exemplary ranges of the contents of different components are as defined below.

A preferred exemplary range of the content of a plant oil in the beverage base of the present invention is in the range of from 0.00002 to 36 w/v%, from 0.00005 to 24 w/v%, or from 0.0001 to 8 w/v%.

The content of limonene in the beverage base of the present invention is preferably in the range of from 0.01 to 60000 ppm, more preferably from 0.05 to 40000 ppm, still more preferably from 0.1 to 20000 ppm.

A preferred exemplary range of the content of a silicone oil in the beverage base of the present invention is in the range of from 0.0004 to 100 ppm, from 0.0004 to 50 ppm, from 0.004 to 50 ppm, or from 0.04 to 10 ppm.

A preferred exemplary range of the ethanol content in the beverage base of the present invention is in the range of from 7 to 70 v/v%, from 10 to 60 v/v%, or from 12 to 50 v/v%.

The content of an emulsifier in the beverage base of this invention is not more than 10 ppm, preferably not more than 2 ppm, or not more than 200 ppb, in total.

(Package)

The beverage, flavoring, raw material liquor, and beverage base of the present invention may be provided in a form packed in a package. Examples of the package form include, but are not limited to, metal package such as can, PET bottle, paper package, glass bottle, and pouch. A sterilized, packaged beverage product can be produced through, for example, taking the step of performing heat sterilization such as retort sterilization after the beverage, etc. of this invention is packed in a package, or the step of packing the beverage, etc. into a package after the beverage, etc. is sterilized.

(Production method)

The method for producing the beverage or beverage base of the present invention comprises the steps of: preparing a liquid comprising a plant oil and a silicone oil; and subjecting the liquid to homogenization treatment to produce a liquid dispersion. The method of this invention may, if necessary, further comprise a step of adding water to the liquid dispersion.

Likewise, the method for producing the flavoring or raw material liquor of the present invention comprises the steps of: preparing a liquid comprising a plant oil and a silicone oil; and subjecting the liquid to homogenization treatment to produce a liquid dispersion.

The aforementioned liquid may also contain some other component(s) in addition to the two components mentioned above, as long as such other component(s) does(do) not impair the effects of the present invention. For example, the liquid may contain a dispersing medium like ethanol as described above in relation to the flavoring and raw material liquor of this invention.

The homogenization treatment can be performed using high pressure homogenization, an ultrasonic homogenizer, high speed stirring, a high speed liquid collision process, or the like. In particular, a high speed liquid collision process is preferred. To be specific, the homogenization treatment comprises causing a part of the liquid to collide with another part of the liquid or with another object. In this preferred embodiment, the wet pulverizing device STAR BURST (produced by Sugino Machine Limited) can be used, for example. In the case of collision of liquids, an oblique collision chamber can be used, for example. In the case of collision of a liquid with another object, a ball-collision chamber can be used, for example. A collision step may be performed only once or two or more times.

The collision takes place at a relative speed of from Mach 0.7 to 7, preferably from Mach 2 to 5, more preferably from Mach 3 to 5. The pressure used to pump out the liquid is in the range of from 40 to 400 MPa, preferably from 100 to 400 MPa, more preferably from 100 to 250 MPa, yet more preferably from 150 to 250 MPa.

In the present invention, the liquid may in advance be subjected to preliminary homogenization treatment prior to the homogenization treatment.

The method for producing the beverage or beverage base of this invention may, if necessary, involve a step of adding water to the liquid dispersion. This step is performed for the purpose of adjusting the water concentration to be within a range suitable for drinking purpose. Therefore, this step is performed, for example, in the case where the water concentration of the liquid dispersion is so low as to be not suitable for drinking purpose.

Further, two or more different types of plant oils may be mixed together before a collision step, or two or more types of liquid dispersions obtained after separate collision steps may be mixed together.

Furthermore, a plant oil may be mixed with another oil intended for use as an antioxidant, such as tocopherol, before a collision step.

(Numerical range)

For the sake of clarity, the numerical ranges defined herein by lower and upper limit values include the lower and upper limit values.

EXAMPLES

Hereunder, the present invention will be described by way of examples, but this invention is not limited to these examples.

(Test Example 1) Investigation of the dispersion stability of a plant oil -- in the case of using flavorings

Flavorings were prepared according to the recipe shown in the table given below.

[Table 1]

|  | Wt. percentage |
|---|---|
| Propylene glycol | 96.70% |
| Plant oil | 3.25% |
| Silicone oil | 0.015% |
| Others | 0.035% |
| Total | 100.00% |

The plant oil used was a natural lemon oil produced by Marugo Corporation. This lemon oil had a limonene content of 13500 ppm. The silicone oil product used was dimethylpolysiloxane (KM-72GS, produced by Shin-Etsu Chemical Co., Ltd.). As indicated in the above table, "silicone oil" refers to a silicone oil (dimethylpolysiloxane) introduced from the aforementioned product, and "others" refers to other components (mainly water) than a silicone oil as contained in the aforementioned product.

The prepared flavorings were subjected to homogenization treatment for dispersion of oils. The homogenization conditions are as shown in the table given below.

[Table 2]

| Flavoring homogenization conditions | Stability | | Aroma | | Comments on aroma |
|---|---|---|---|---|---|
|  | RTD | Beverage base | RTD | Beverage base |  |
| No silicone oil+common homogenizer | × | × | × | × | Oil separation was observed, and variations in aroma were reported. |
| Silicone oil+common homogenizer | △ | △ | △ | △ | Oil separation was observed, and variations in aroma were reported. |
| Emulsifier + common homogenizer | ◎ | ◎ | × | × | Bitterness of an emulsifier was perceived, and flavor release was also bad. |
| No silicone oil + Sugino Machine | × | × | △ | △ | Oil separation was observed, and variations in aroma were reported. |
| Silicone oil + Sugino Machine | ◎ | ◎ | ◎ | ◎ | Samples were rich in aroma and taste, and tasted very good. |
| Emulsifier+ Sugino Machine | ◎ | ◎ | △ | △ | Bitterness of an emulsifier was perceived, and flavor release was also bad. |

As indicated in the above table, "no silicone oil" means that a flavoring was prepared according to Table 1 except that no silicone oil was used. "Emulsifier" means that a flavoring was prepared according to Table 1 except that the silicone oil indicated in Table 1 was replaced with a glycerol ester of fatty acids (RYOTO Polyglyester, produced by Mitsubishi-Chemical Foods Corporation) (in the same amount of a silicone oil as indicated in Table 1). "Common homogenizer" means that homogenization was performed with the high pressure homogenizer LAB2000 (produced by SMT Co., Ltd.) at a homogenization pressure of 200 MPa. "Sugino Machine" means that different parts of a flavoring liquid were caused to collide with each other once at a pump pressure of 245 MPa using the wet pulverizing device "Star Burst 10" produced by Sugino Machine Limited.

Thereafter, alcoholic beverages (RTD) and beverage bases were prepared using each of the treated flavorings.

First, each of the treated flavorings (final concentration: 0.1%), fructose-glucose syrup (final concentration: 2 w/v%), an acidulant (citric acid, final concentration: 0.3 w/v%), and water and neutral spirits (alcohol content: 58 v/v%) were mixed to give packaged alcoholic beverages (RTD) with a final alcohol concentration of 5 v/v%. A pressure-resistance container and a carbon dioxide gas cylinder were used to inject carbon dioxide gas into the beverages. The obtained RTD beverages had a silicone oil concentration of 0.15 ppm and a lemon oil concentration of 0.00325 w/v%. The weight ratio of lemon oil content/silicone oil content was 217.

Next, alcoholic beverage bases were prepared. To be specific, each of the treated flavorings (final concentration: 0.4%), fructose-glucose syrup (final concentration: 8 w/v%), an acidulant (citric acid, final concentration: 1.2 w/v%), and

9

water and neutral spirits (alcohol content: 58 v/v%) were mixed to give beverage bases with a final alcohol concentration of 20 v/v%. The obtained beverage bases had a silicone oil concentration of 0.6 ppm and a lemon oil concentration of 0.013 w/v%. The weight ratio of lemon oil content/silicone oil content was 217.

The obtained RTD beverages and beverage bases were evaluated for stability and aroma. For the purpose of evaluation of stability, the above-obtained RTD beverages and beverage bases were used as they were. In other words, these RTD beverages and beverage bases were stored in a thermostatic bath at 40°C for 90 days and then visually inspected for their dispersed state.

For the purpose of evaluation of aroma, the RTD beverages, and diluted beverages obtained by diluting each of the above-obtained beverage bases were used. Speaking more specifically of dilution, the beverage bases were diluted with water (distilled water) to a water/beverage base ratio of 3:1. The thus-obtained beverages were subjected to aroma evaluation.

The evaluation of stability and aroma was performed by four trained professional panelists. The sample ratings were determined through discussion among the panelists.

Stability

◎: A beverage is extremely high in stability, with no oil separation or sediment.
○: A beverage is high in stability, with no oil separation or sediment.
△: Some oil droplets or sediments are observed.
×: Oil separation and floating, or sediments are observed.

(The "sediments" as referred to above refers to the presence of oil-containing aggregates which deteriorate the appearance of a beverage.)

Aroma

◎: A beverage is very rich in aroma and taste, and tastes very good.
○: A beverage is rich in aroma and taste, and tastes good.
△: A beverage is somewhat poor in aroma.
×: A beverage is poor in aroma.

Results

The results are as shown in the table given above. Excellent oil dispersion stability was achieved even with the use of a silicone oil instead of an emulsifier. It was expected that the dispersion stability could be further enhanced by adjusting the amount of a silicone oil added. Also, the use of a silicone oil was superior to the use of an emulsifier, because the silicone oil had no off-taste peculiar to an emulsifier. Further, not only stability but also aroma were significantly enhanced with the combined use of a silicone oil with a collision-type homogenizer (produced by Sugino Machine). Those samples prepared using Sugino Machine's homogenizer exhibited less cloudiness and significantly higher clarity as compared to the other samples.

Although a lemon oil was used as a plant oil in this test example, even similar experiments, which were performed by the same procedure as in this example except for using a coffee oil (produced by Marugo Corporation) or a grapeseed oil (produced by Ajinomoto Co., Inc.) instead of a lemon oil, showed almost the same results as shown in Table 2.

Further, even similar experiments, which were performed by the same procedure as in this example except for using glycerol instead of propylene glycol, showed almost the same results as shown in Table 2.

All of the prepared RTD beverages and beverage bases had an emulsifier content well below 5 ppm. Similar low levels of emulsifier content were observed in all of the samples of the subsequent test examples.

(Test Example 2) Investigation of the dispersion stability of a plant oil -- in the case of using raw material liquors

In Test Example 1, propylene glycol-based flavorings were prepared and used for investigation. In this test example, raw material liquors were prepared by following the same procedure as in Test Example 1 except that propylene glycol was replaced with ethanol and water. The relative percentages of components are as shown in the table given below.

[Table 3]

|  | Wt. percentage |
|---|---|
| 95v/v% ethanol | 73.70% |
| Water | 23.00% |
| Plant oil | 3.25% |
| Silicone oil | 0.015% |
| Others | 0.035% |
| Total | 100.00% |

The plant oil and silicone oil product used, and "others" as indicated in the above table, were the same as in Test Example 1.

The prepared raw material liquors were subjected to homogenization treatment. The homogenization conditions are as shown in the table given below.

[Table 4]

| Raw material liquor homogenization conditions | Stability | | Aroma | | Comments on aroma |
|---|---|---|---|---|---|
|  | RTD | Beverage base | RTD | Beverage base |  |
| No silicone oil+common homogenizer | × | × | × | × | Oil separation was observed, and variations in aroma were reported. |
| Silicone oil+common homogenizer | △ | △ | △ | △ | Oil separation was observed, and variations in aroma were reported. |
| Emulsifier + common homogenizer | ◎ | ◎ | × | × | Bitterness of an emulsifier was perceived, and flavor release was also bad. |
| No silicone oil + Sugino Machine | × | × | △ | △ | Oil separation was observed, and variations in aroma were reported. |
| Silicone oil + Sugino Machine | ◎ | ◎ | ◎ | ◎ | Samples were rich in aroma and taste, and tasted very good. |
| Emulsifier+ Sugino Machine | ◎ | ◎ | △ | △ | Bitterness of an emulsifier was perceived, and flavor release was also bad. |

The treated raw material liquors were evaluated for stability and aroma by the same procedure as in Test Example 1. In other words, RTD beverages and beverage bases were prepared from each of the treated raw material liquors, and evaluated using the same evaluation scale as in Test Example 1. The obtained RTD beverages had a silicone oil concentration of 0.15 ppm and a lemon oil concentration 0.00325 w/v%. The weight ratio of lemon oil content/silicone oil content in the RTD beverages was 217. The obtained beverage bases had a silicone oil concentration of 0.6 ppm and a lemon oil concentration 0.013 w/v%. The weight ratio of lemon oil content/silicone oil content in the beverage bases was 217.

Results

The results are as shown in the table given above. The results of this test showed similar tendencies to those of the test using flavorings.

(Test Example 3) Effects of homogenization pressures

The effects of homogenization pressures were investigated in each of the cases of using a flavoring or using a raw material liquor.

The flavoring prepared as per Table 1, and the raw material liquor prepared as per Table 3, were homogenized under the condition "silicone oil + Sugino Machine" as shown in Table 2 in Test Example 1 using varying homogenization pressures. RTD beverages and beverage bases were prepared from each of the treated flavorings and raw material liquors, and evaluated for stability and aroma. The evaluation procedure and scale used were the same as in Test Example 1.

The results are shown in the tables given below. In any cases where flavorings and raw material liquors were homogenized at homogenization pressures (pump pressures) of from 100 to 245 MPa, the samples prepared therefrom were excellent in stability and aroma.

[Table 5]

| In the case of using a flavoring | Stability | | Aroma | |
|---|---|---|---|---|
| Pressure (MPa) | RTD | Beverage base | RTD | Beverage base |
| 30 | × | × | × | × |
| 40 | ○ | ○ | ◎ | ◎ |
| 100 | ◎ | ◎ | ◎ | ◎ |
| 150 | ◎ | ◎ | ◎ | ◎ |
| 200 | ◎ | ◎ | ◎ | ◎ |
| 245 | ◎ | ◎ | ◎ | ◎ |

[Table 6]

| In the case of using a raw material liquor | Stability | | Aroma | |
|---|---|---|---|---|
| Pressure (MPa) | RTD | Beverage base | RTD | Beverage base |
| 30 | × | × | × | × |
| 40 | ○ | ○ | ◎ | ◎ |
| 100 | ◎ | ◎ | ◎ | ◎ |
| 150 | ◎ | ◎ | ◎ | ◎ |
| 200 | ◎ | ◎ | ◎ | ◎ |
| 245 | ◎ | ◎ | ◎ | ◎ |
| 250 | ◎ | ◎ | ◎ | ◎ |
| 400 | ◎ | ◎ | ◎ | ◎ |

(Test Example 4) Silicone oil content

Next, a silicone oil content effective for the stabilization of oil dispersion was investigated in each of the cases of using flavorings or using raw material liquors.

The flavoring and raw material liquor were prepared basically as per Table 1 and Table 3, respectively. However, the silicone oil content was varied as shown in the tables given below, and corresponding decreases in silicone oil content were made up for with a solvent (*i.e.,* propylene glycol in the case of using the flavor, or ethanol in the case of using the raw material liquor) to adjust the total percentage of components to 100%.

The prepared flavorings and raw material liquors were homogenized under the condition "silicone oil + Sugino Machine" as used in Test Example 1. The pump pressure used was 245 MPa.

RTD beverages and beverage bases were prepared from each of the treated flavorings and raw material liquors, and evaluated for stability and aroma, by following the same procedures as in Test Example 1. The results are as shown in the tables given below.

[Table 7A]

| In the case of using flavorings (RTD) | | | | |
|---|---|---|---|---|
| Silicone oil content in flavoring (ppm) | Stability | Aroma | Silicone oil content in RTD (ppm) | Weight ratio of plant oil/silicone oil |
| 0.01 | △ | △ | 0.00001 | 3250000 |

(continued)

| In the case of using flavorings (RTD) | | | | |
|---|---|---|---|---|
| Silicone oil content in flavoring (ppm) | Stability | Aroma | Silicone oil content in RTD (ppm) | Weight ratio of plant oil/silicone oil |
| 0.1 | ◎ | ◎ | 0.0001 | 325000 |
| 1 | ◎ | ◎ | 0.001 | 32500 |
| 10 | ◎ | ◎ | 0.01 | 3250 |
| 50 | ◎ | ◎ | 0.05 | 650 |
| 500 | ◎ | ◎ | 0.5 | 65 |
| 1000 | ◎ | ◎ | 1 | 33 |
| 1250 | ◎ | ◎ | 1.25 | 26 |
| 2500 | ◎ | ◎ | 2.5 | 13 |
| 12500 | ◎ | ◎ | 12.5 | 2.6 |
| 25000 | ◎ | ○ | 25 | 1.3 |
| 100000 | ◎ | × | 100 | 0.3 |

[Table 7B]

| In the case of using flavorings (beverage bases) | | | | |
|---|---|---|---|---|
| Silicone oil content in flavoring (ppm) | Stability | Aroma | Silicone oil content in beverage base (ppm) | Weight ratio of plant oil/silicone oil |
| 0.01 | △ | △ | 0.00004 | 3250000 |
| 0.1 | ◎ | ◎ | 0.0004 | 325000 |
| 1 | ◎ | ◎ | 0.004 | 32500 |
| 10 | ◎ | ◎ | 0.04 | 3250 |
| 50 | ◎ | ◎ | 0.2 | 650 |
| 500 | ◎ | ◎ | 2 | 65 |
| 1000 | ◎ | ◎ | 4 | 33 |
| 1250 | ◎ | ◎ | 5 | 26 |
| 2500 | ◎ | ◎ | 10 | 13 |
| 12500 | ◎ | ◎ | 50 | 2.6 |
| 25000 | ◎ | ○ | 100 | 1.3 |
| 100000 | ◎ | × | 400 | 0.3 |

[Table 8A]

| In the case of using raw material liquors (RTD) | | | | |
|---|---|---|---|---|
| Silicone oil content in raw material liquor (ppm) | Stability | Aroma | Silicone oil content in RTD (ppm) | Weight ratio of plant oil/silicone oil |
| 0.01 | △ | △ | 0.00001 | 3250000 |
| 0.1 | ◎ | ◎ | 0.0001 | 325000 |
| 1 | ◎ | ◎ | 0.001 | 32500 |
| 10 | ◎ | ◎ | 0.01 | 3250 |
| 50 | ◎ | ◎ | 0.05 | 650 |

(continued)

| In the case of using raw material liquors (RTD) | | | | |
|---|---|---|---|---|
| Silicone oil content in raw material liquor (ppm) | Stability | Aroma | Silicone oil content in RTD (ppm) | Weight ratio of plant oil/silicone oil |
| 500 | ◎ | ◎ | 0.5 | 65 |
| 1000 | ◎ | ◎ | 1 | 33 |
| 1250 | ◎ | ◎ | 1.25 | 26 |
| 2500 | ◎ | ◎ | 2.5 | 13 |
| 12500 | ◎ | ◎ | 12.5 | 2.6 |
| 25000 | ◎ | ○ | 25 | 1.3 |
| 100000 | ◎ | × | 100 | 0.3 |

[Table 8B]

| In the case of using raw material liquors (beverage bases) | | | | |
|---|---|---|---|---|
| Silicone oil content in raw material liquor (ppm) | Stability | Aroma | Silicone oil content in beverage base (ppm) | Weight ratio of plant oil/silicone oil |
| 0.01 | △ | △ | 0.00004 | 3250000 |
| 0.1 | ◎ | ◎ | 0.0004 | 325000 |
| 1 | ◎ | ◎ | 0.004 | 32500 |
| 10 | ◎ | ◎ | 0.04 | 3250 |
| 50 | ◎ | ◎ | 0.2 | 650 |
| 500 | ◎ | ◎ | 2 | 65 |
| 1000 | ◎ | ◎ | 4 | 33 |
| 1250 | ◎ | ◎ | 5 | 26 |
| 2500 | ◎ | ◎ | 10 | 13 |
| 12500 | ◎ | ◎ | 50 | 2.6 |
| 25000 | ◎ | ○ | 100 | 1.3 |
| 100000 | ◎ | × | 400 | 0.3 |

In any cases where flavorings and raw material liquors contained a silicone oil at a specified range of concentrations, the samples prepared therefrom showed satisfactory results.

Further, when similar experiments were performed under the conditions where the plant oil content in the flavorings and raw material liquors was changed to 10% and the weight ratio of plant oil to silicone oil was adjusted to the same values as shown in the tables given above, the results of these experiments on stability and aroma showed the same tendencies as shown in the tables given above.

Additionally, when the flavorings and raw material liquors as shown in Tables 7 and 8 were evaluated, *per se*, for stability by the same procedure as used for RTD beverages and beverage bases, the results of this evaluation on stability showed the same tendencies as shown in Tables 7 and 8.

(Test Example 5) Types of silicone oils

The effects of the types of silicone oils were investigated in each of the cases of using flavorings or using raw material liquors.

To be specific, flavorings and raw material liquors were prepared according to the same recipes as shown in Tables 1 and 3, respectively, except that the type of a silicone oil used was varied. The prepared flavorings and raw material liquors were homogenized under the condition "silicone oil + Sugino Machine" as used in Test Example 1. The pump pressure used was 245 MPa.

RTD beverages and beverage bases were prepared from each of the treated flavorings and raw material liquors, and evaluated for stability and aroma, by following the same procedures as in Test Example 1. The results are as shown in the tables given below. In any cases where the flavorings and raw material liquors were prepared using varied types of silicone oils, the samples prepared therefrom were found to be excellent in stability and aroma.

[Table 9]

| In the case of using flavorings | Stability | | Aroma | |
|---|---|---|---|---|
| Type of silicone oil | RTD | Beverage base | RTD | Beverage base |
| Polydimethylsiloxane | ◎ | ◎ | ◎ | ◎ |
| Methylphenylsiloxane | ◎ | ◎ | ◎ | ◎ |

[Table 10]

| In the case of using raw material liquors | Stability | | Aroma | |
|---|---|---|---|---|
| Type of silicone oil | RTD | Beverage base | RTD | Beverage base |
| Polydimethylsiloxane | ◎ | ◎ | ◎ | ◎ |
| Methylphenylsiloxane | ◎ | ◎ | ◎ | ◎ |

(Test Example 6) Types of plant oils

The effects of varied types of plant oils were investigated in each of the cases of using flavorings or using raw material liquors.

Flavorings and raw material liquors were prepared by the same procedures as in Test Examples 1 and 2, respectively, except that the type of a plant oil used was varied. The prepared flavorings and raw material liquors were homogenized under the condition "silicone oil + Sugino Machine". The plant oils used were three essential oils: *i.e.,* lemon oil, orange oil, and coffee oil; and two oils and fats: grapeseed oil and coconut oil (lemon oil, orange oil, and coffee oil, produced by Marugo Corporation; grapeseed oil, produced by Ajinomoto Co., Inc.; and coconut oil, produced by the Nisshin OilliO Group, Ltd.).

Next, the samples prepared from the treated flavorings and raw material liquors were evaluated for stability and aroma by the same procedure as in Test Example 1. The results are shown below. Even when flavorings and raw material liquors were prepared using varied types of plant oils, the samples prepared therefrom were found to be satisfactory in dispersion stability and aroma. In particular, the samples prepared using citrus essential oils were excellent in aroma because the citrus aroma spread in the mouth.

[Table 11]

| In the case of using flavorings | Stability | | Aroma | |
|---|---|---|---|---|
| Type of plant oil | RTD | Beverage base | RTD | Beverage base |
| Lemon oil | ◎ | ◎ | ◎ | ◎ |
| Orange oil | ◎ | ◎ | ◎ | ◎ |
| Coffee oil | ◎ | ◎ | ◎ | ◎ |
| Grapeseed oil | ◎ | ◎ | ◎ | ◎ |
| Coconut oil | ◎ | ◎ | ◎ | ◎ |

[Table 12]

| In the case of using raw material liquors | Stability | | Aroma | |
|---|---|---|---|---|
| Type of plant oil | RTD | Beverage base | RTD | Beverage base |
| Lemon oil | ◎ | ◎ | ◎ | ◎ |
| Orange oil | ◎ | ◎ | ◎ | ◎ |
| Coffee oil | ◎ | ◎ | ◎ | ◎ |

EP 4 083 177 B1

(continued)

| In the case of using raw material liquors | Stability | | Aroma | |
|---|---|---|---|---|
| Type of plant oil | RTD | Beverage base | RTD | Beverage base |
| Grapeseed oil | ◎ | ◎ | ◎ | ◎ |
| Coconut oil | ◎ | ◎ | ◎ | ◎ |

(Test Example 7)

Different beverages were prepared using each of different flavorings and investigated for dispersion stability depending on the alcohol content.

[Table 13]

| | Alcohol content (v/v%) | Stability | Taste |
|---|---|---|---|
| Ex. 1 | 63 | ◎ | ◎ |
| Ex. 2 | 40 | ◎ | ◎ |
| Ex. 3 | 25 | ◎ | ◎ |
| Ex. 4 | 7 | ◎ | ◎ |
| Ex. 5 | 0 | ◎ | ◎ |
| Com. Ex. 1 | 25 | × | × |
| Com. Ex. 2 | 7 | Δ | Δ |

In Examples 1 to 5, a flavoring was prepared as per Table 1 and homogenized under the condition "silicone oil + Sugino Machine" as shown in Table 2 at a pump pressure of 245 MPa, and the treated flavoring was used to prepare beverage samples.

In Comparative Examples 1 and 2, a flavoring composition was prepared as per Table 1 except for replacing a silicone oil with 0.015% of an emulsifier (a glycerol ester of fatty acids), and homogenized by the same procedure as in Examples 1 to 5, and the treated flavoring was used to prepare beverage samples.

RTD beverages were prepared from each of the obtained flavorings. To be specific, 0.4% of each of the flavorings, as calculated based on the total amount of the beverage, was mixed with water and optionally neutral spirits (alcohol content: 65 v/v%) so as to adjust the final ethanol concentration to the values as shown in Table 13, whereby samples of Examples 1 to 5 and Comparative Examples 1 and 2 were obtained. The obtained samples were evaluated for stability and aroma. The evaluation procedure and scale used are as described in Test Example 1.

A sample with an alcohol content of 0 v/v% was directly evaluated for aroma without dilution. However, those samples with an alcohol content of 7 v/v% or higher were diluted with water to an alcohol content of 7% before evaluation on aroma.

The samples prepared using a flavoring containing an emulsifier showed a decreasing tendency of stability and aroma with an increase in alcohol content. Such a disadvantage was not observed in any of the samples prepared using a flavoring containing a silicone oil.

(Test Example 8) Particle size of dispersed microparticles

Three raw material liquors were prepared under three different conditions (pump pressure: 100 MPa, 200 MPa, 245 MPa) by following the same procedure as used in Test Example 3. Each of the prepared raw material liquors was diluted 1000-fold with water to prepare beverage samples.

The prepared beverages were determined for the particle size of oil and fat microparticles. To be specific, analysis samples were prepared by optionally deaerating or diluting the beverages, and subjected to analysis using Zetasizer Nano ZS produced by Malvern Panalytical Ltd. The results are shown in the table given below.

[Table 14]

| | Average nm | SD | SDx 3 |
|---|---|---|---|
| 245M Pa | 163 | 24.25 | 72.75 |

(continued)

|  | Average nm | SD | SDx 3 |
|---|---|---|---|
| 200M Pa | 167 | 26.08 | 78.24 |
| 100MPa | 162 | 26.28 | 78.84 |

All of the samples had a particle size within a specified range, and a very small standard deviation. No change in particle size was observed in any of the samples stored for 90 days.

It was confirmed that not only the beverage samples but also the undiluted flavorings and raw material liquors showed a similar tendency of particle size to that mentioned above. It is considered that oil and fat microparticles, once formed, maintained their state both before and after dilution.

## Claims

1. A beverage comprising a silicone oil, a plant oil, and water, wherein the plant oil is dispersed in the beverage, wherein microparticles of the dispersed plant oil have an average particle size of from 30 to 500 nm, and wherein the average particle size value of the microparticles of the dispersed plant oil is greater than a value of three times as much as the standard deviation of the particle size of the microparticles, wherein the content of an emulsifier is not more than 5 ppm, and wherein the emulsifier is not the silicone oil.

2. The beverage according to claim 1, wherein the content of the silicone oil is in the range of from 0.0001 to 100 ppm.

3. The beverage according to claim 1 or 2, wherein the plant oil is a plant oil and fat and/or essential oil.

4. The beverage according to any one of claims 1 to 3, wherein the plant oil comprises a citrus peel essential oil.

5. The beverage according to any one of claims 1 to 4, wherein the plant oil comprises limonene.

6. The beverage according to any one of claims 1 to 5, wherein a weight ratio of the content of the plant oil to that of the silicone oil is in the range of from 1 to 325000.

7. The beverage according to any one of claims 1 to 6, wherein the content of ethanol is in the range of from 0 v/v% to 70 v/v%.

8. A beverage base comprising a silicone oil, a plant oil, and water, wherein the plant oil is dispersed in the beverage base, wherein microparticles of the dispersed plant oil have an average particle size of from 30 to 500 nm, and wherein the average particle size value of the microparticles of the dispersed plant oil is greater than a value of three times as much as the standard deviation of the particle size of the microparticles, wherein the content of an emulsifier is not more than 10 ppm, and wherein the emulsifier is not the silicone oil.

9. A raw material liquor comprising a silicone oil and a plant oil, wherein the plant oil is dispersed in the raw material liquor, wherein microparticles of the dispersed plant oil have an average particle size of from 30 to 500 nm, and wherein the average particle size value of the microparticles of the dispersed plant oil is greater than a value of three times as much as the standard deviation of the particle size of the microparticles, wherein the content of an emulsifier is not more than 5 ppm, and wherein the emulsifier is not the silicone oil.

10. The raw material liquor according to claim 9, wherein the content of the silicone oil is in the range of from 0.1 to 25000 ppm.

11. A flavoring comprising a silicone oil and a plant oil, wherein the plant oil is dispersed in the flavoring, wherein microparticles of the dispersed plant oil have an average particle size of from 30 to 500 nm, and wherein the average particle size value of the microparticles of the dispersed plant oil is greater than a value of three times as much as the standard deviation of the particle size of the microparticles, wherein the content of an emulsifier is not more than 5 ppm, and wherein the emulsifier is not the silicone oil.

12. The flavoring according to claim 11, wherein the content of the silicone oil is in the range of from 0.1 to 25000 ppm.

13. A method for producing a beverage comprising a silicone oil, a plant oil, and water, the method comprising the steps of:

preparing a liquid comprising the plant oil and the silicone oil;
subjecting the liquid to homogenization treatment to produce a liquid dispersion; and
if necessary, adding water to the liquid dispersion, wherein the homogenization treatment comprises causing a part of the liquid to collide with another part of the liquid or with another object,
wherein the pump pressure used for the collision is in the range of from 40 MPa to 400 MPa, wherein collision takes place at a relative speed of from Mach 0.7 to 7, and wherein the content of an emulsifier in the beverage is not more than 5 ppm, and wherein the emulsifier is not the silicone oil.

14. A method for producing a beverage base comprising a silicone oil, a plant oil, and water, the method comprising the steps of:

preparing a liquid comprising the plant oil and the silicone oil;
subjecting the liquid to homogenization treatment to produce a liquid dispersion; and
if necessary, adding water to the liquid dispersion, wherein the homogenization treatment comprises causing a part of the liquid to collide with another part of the liquid or with another object,
wherein the pump pressure used for the collision is in the range of from 40 MPa to 400 MPa, wherein collision takes place at a relative speed of from Mach 0.7 to 7, and wherein the content of an emulsifier in the beverage base is not more than 10 ppm, and wherein the emulsifier is not the silicone oil.

15. A method for producing a flavoring or raw material liquor comprising a silicone oil and a plant oil; the method comprising the steps of:

preparing a liquid comprising the plant oil and the silicone oil; and
subjecting the liquid to homogenization treatment to produce a liquid dispersion, wherein
the homogenization treatment comprises causing a part of the liquid to collide with another part of the liquid or with another object,
wherein the pump pressure used for the collision is in the range of from 40 MPa to 400 MPa, wherein collision takes place at a relative speed of from Mach 0.7 to 7, and wherein the content of an emulsifier in the flavoring or raw material liquor is not more than 5 ppm, and wherein the emulsifier is not the silicone oil.

**Patentansprüche**

1. Ein Getränk, umfassend ein Silikonöl, ein Pflanzenöl und Wasser, wobei das Pflanzenöl in dem Getränk dispergiert ist, wobei Mikroteilchen des dispergierten Pflanzenöls eine mittlere Teilchengröße von 30 bis 500 nm aufweisen, und wobei der mittlere Teilchengrößenwert der Mikroteilchen des dispergierten Pflanzenöls größer ist als ein Wert, der dreimal so groß ist wie die Standardabweichung der Teilchengröße der Mikroteilchen, wobei der Gehalt eines Emulgators nicht mehr als 5 ppm beträgt und wobei der Emulgator nicht das Silikonöl ist.

2. Das Getränk nach Anspruch 1, wobei der Gehalt des Silikonöls im Bereich von 0,0001 bis 100 ppm liegt.

3. Das Getränk nach Anspruch 1 oder 2, wobei das Pflanzenöl ein Pflanzenöl und -fett und/oder ein ätherisches Öl ist.

4. Das Getränk nach einem der Ansprüche 1 bis 3, wobei das Pflanzenöl ein ätherisches Öl aus Zitrusschalen umfasst.

5. Das Getränk nach einem der Ansprüche 1 bis 4, wobei das Pflanzenöl Limonen umfasst.

6. Das Getränk nach einem der Ansprüche 1 bis 5, wobei ein Gewichtsverhältnis des Gehalts des Pflanzenöls zu dem des Silikonöls im Bereich von 1 bis 325000 liegt.

7. Das Getränk nach einem der Ansprüche 1 bis 6, wobei der Gehalt an Ethanol im Bereich von 0 v/v-% bis 70 v/v-% liegt.

8. Eine Getränkebasis, umfassend ein Silikonöl, ein Pflanzenöl und Wasser, wobei das Pflanzenöl in der Getränkebasis dispergiert ist, wobei Mikroteilchen des dispergierten Pflanzenöls eine mittlere Teilchengröße von 30 bis 500 nm aufweisen und wobei der mittlere Teilchengrößenwert der Mikroteilchen des dispergierten Pflanzenöls größer ist als ein Wert, der dreimal so groß ist wie die Standardabweichung der Teilchengröße der Mikroteilchen, wobei der Gehalt eines Emulgators nicht mehr als 10 ppm beträgt und wobei der Emulgator nicht das Silikonöl ist.

9. Eine Rohstoffflüssigkeit, umfassend ein Silikonöl und ein Pflanzenöl, wobei das Pflanzenöl in der Rohstoffflüssigkeit dispergiert ist, wobei Mikroteilchen des dispergierten Pflanzenöls eine mittlere Teilchengröße von 30 bis 500 nm aufweisen und wobei der mittlere Teilchengrößenwert der Mikroteilchen des dispergierten Pflanzenöls größer ist als ein Wert, der dreimal so groß ist wie die Standardabweichung der Teilchengröße der Mikroteilchen, wobei der Gehalt eines Emulgators nicht mehr als 5 ppm beträgt und wobei der Emulgator nicht das Silikonöl ist.

10. Die Rohstoffflüssigkeit nach Anspruch 9, wobei der Gehalt des Silikonöls im Bereich von 0,1 bis 25000 ppm liegt.

11. Ein Aromastoff, umfassend ein Silikonöl und ein Pflanzenöl, wobei das Pflanzenöl in dem Aromastoff dispergiert ist, wobei Mikroteilchen des dispergierten Pflanzenöls eine mittlere Teilchengröße von 30 bis 500 nm aufweisen und wobei der mittlere Teilchengrößenwert der Mikroteilchen des dispergierten Pflanzenöls größer ist als ein Wert, der dreimal so groß ist wie die Standardabweichung der Teilchengröße der Mikroteilchen, wobei der Gehalt eines Emulgators nicht mehr als 5 ppm beträgt und wobei der Emulgator nicht das Silikonöl ist.

12. Der Aromastoff nach Anspruch 11, wobei der Gehalt des Silikonöls im Bereich von 0,1 bis 25000 ppm liegt.

13. Ein Verfahren zur Herstellung eines Getränks, umfassend ein Silikonöl, ein Pflanzenöl und Wasser, wobei das Verfahren die Schritte umfasst:

Herstellen einer Flüssigkeit, die das Pflanzenöl und das Silikonöl umfasst;
Unterziehen der Flüssigkeit einer Homogenisierungsbehandlung, um eine flüssige Dispersion herzustellen; und falls erforderlich, Zugabe von Wasser zu der flüssigen Dispersion, wobei die Homogenisierungsbehandlung umfasst, dass ein Aufeinandertreffen eines Teils der Flüssigkeit mit einem anderen Teil der Flüssigkeit oder mit einem anderen Gegenstand bewirkt wird,
wobei der für das Aufeinandertreffen verwendete Pumpendruck im Bereich von 40 MPa bis 400 MPa liegt,
wobei das Aufeinandertreffen mit einer relativen Geschwindigkeit von Mach 0,7 bis 7 erfolgt und wobei der Gehalt eines Emulgators in dem Getränk nicht mehr als 5 ppm beträgt und wobei der Emulgator nicht das Silikonöl ist.

14. Ein Verfahren zur Herstellung einer Getränkebasis, umfassend ein Silikonöl, ein Pflanzenöl und Wasser, wobei das Verfahren die Schritte umfasst:

Herstellen einer Flüssigkeit, die das Pflanzenöl und das Silikonöl umfasst;
Unterziehen der Flüssigkeit einer Homogenisierungsbehandlung, um eine flüssige Dispersion herzustellen; und falls erforderlich, Zugabe von Wasser zu der flüssigen Dispersion, wobei die Homogenisierungsbehandlung umfasst, dass ein Aufeinandertreffen eines Teils der Flüssigkeit mit einem anderen Teil der Flüssigkeit oder mit einem anderen Gegenstand bewirkt wird,
wobei der für das Aufeinandertreffen verwendete Pumpendruck im Bereich von 40 MPa bis 400 MPa liegt,
wobei das Aufeinandertreffen mit einer relativen Geschwindigkeit von Mach 0,7 bis 7 erfolgt und wobei der Gehalt eines Emulgators in der Getränkebasis nicht mehr als 10 ppm beträgt und wobei der Emulgator nicht das Silikonöl ist.

15. Ein Verfahren zur Herstellung einer Aromastoff- oder Rohstoffflüssigkeit, umfassend ein Silikonöl und ein Pflanzenöl, wobei das Verfahren die Schritte umfasst:

Herstellen einer Flüssigkeit, die das Pflanzenöl und das Silikonöl umfasst; und
Unterziehen der Flüssigkeit einer Homogenisierungsbehandlung, um eine flüssige Dispersion herzustellen, wobei die Homogenisierungsbehandlung umfasst, dass ein Aufeinandertreffen eines Teils der Flüssigkeit mit einem anderen Teil der Flüssigkeit oder mit einem anderen Gegenstand bewirkt wird,
wobei der für das Aufeinandertreffen verwendete Pumpendruck im Bereich von 40 MPa bis 400 MPa liegt,
wobei das Aufeinandertreffen bei einer relativen Geschwindigkeit von Mach 0,7 bis 7 erfolgt und wobei der Gehalt eines Emulgators in der Aromastoff- oder Rohstoffflüssigkeit nicht mehr als 5 ppm beträgt und wobei der Emulgator nicht das Silikonöl ist.

**Revendications**

1. Boisson comprenant une huile de silicone, une huile végétale, et de l'eau, dans laquelle l'huile végétale est dispersée dans la boisson, dans laquelle les microparticules de l'huile végétale dispersée ont une taille moyenne de particules allant de 30 à 500 nm, et dans laquelle la valeur de la taille moyenne de particule des microparticules de l'huile végétale dispersée est supérieure à une valeur égale à trois fois l'écart-type de la taille de particule des microparticules, dans laquelle la teneur en un émulsifiant n'est pas supérieure à 5 ppm, et dans laquelle l'émulsifiant n'est pas l'huile de silicone.

2. Boisson selon la revendication 1, dans laquelle la teneur en huile de silicone est dans une plage allant de 0,0001 à 100 ppm.

3. Boisson selon la revendication 1 ou 2, dans laquelle l'huile végétale est une huile essentielle et/ou une graisse et une huile végétale.

4. Boisson selon l'une quelconque des revendications 1 à 3, dans laquelle l'huile végétale comprend une huile essentielle d'écorce d'agrumes.

5. Boisson selon l'une quelconque des revendications 1 à 4, dans laquelle l'huile végétale comprend du limonène.

6. Boisson selon l'une quelconque des revendications 1 à 5, dans laquelle le rapport en poids de la teneur en huile végétale à celle en huile de silicone se situe dans une plage allant de 1 à 325 000.

7. Boisson selon l'une quelconque des revendications 1 à 6, dans laquelle la teneur en éthanol est située dans une plage allant de 0 % v/v à 70 % v/v.

8. Base de boisson comprenant une huile de silicone, une huile végétale, et de l'eau, dans laquelle l'huile végétale est dispersée dans la base de boisson, dans laquelle les microparticules de l'huile végétale dispersée ont une taille moyenne de particules allant de 30 à 500 nm, et dans laquelle la valeur de la taille moyenne de particule des microparticules de l'huile végétale dispersée est supérieure à une valeur égale à trois fois l'écart-type de la taille de particule des microparticules, dans laquelle la teneur en un émulsifiant n'est pas supérieure à 10 ppm, et dans laquelle l'émulsifiant n'est pas l'huile de silicone.

9. Liqueur de matière première comprenant une huile de silicone et une huile végétale, dans laquelle l'huile végétale est dispersée dans la liqueur de matière première, dans laquelle les microparticules de l'huile végétale dispersée ont une taille moyenne de particules allant de 30 à 500 nm, et dans laquelle la valeur de la taille moyenne de particule des microparticules de l'huile végétale dispersée est supérieure à une valeur égale à trois fois l'écart-type de la taille de particule des microparticules, dans laquelle la teneur en un émulsifiant n'est pas supérieure à 5 ppm, et dans laquelle l'émulsifiant n'est pas l'huile de silicone.

10. Liqueur de matière première selon la revendication 9, dans laquelle la teneur en huile de silicone est dans une plage allant de 0,1 à 25 000 ppm.

11. Arôme comprenant une huile de silicone et une huile végétale, dans lequel l'huile végétale est dispersée dans l'arôme, dans lequel les microparticules de l'huile végétale dispersée ont une taille moyenne de particules allant de 30 à 500 nm, et dans lequel la valeur de la taille moyenne de particule des microparticules de l'huile végétale dispersée est supérieure à une valeur égale à trois fois l'écart-type de la taille de particule des microparticules, dans lequel la teneur en un émulsifiant n'est pas supérieure à 5 ppm, et dans lequel l'émulsifiant n'est pas l'huile de silicone.

12. Arôme selon la revendication 11, dans lequel la teneur en huile de silicone est située dans une plage allant de 0,1 à 25 000 ppm.

13. Méthode de production d'une boisson comprenant une huile de silicone, une huile végétale, et de l'eau, la méthode comprenant les étapes de :

préparation d'un liquide comprenant l'huile végétale et l'huile de silicone ;
soumission du liquide à un traitement d'homogénéisation pour produire une dispersion liquide ; et
si nécessaire, ajout d'eau à la dispersion liquide, dans laquelle le traitement d'homogénéisation comprend le fait de causer la collision d'une partie du liquide avec une autre partie du liquide ou avec un autre objet, dans laquelle la pression de la pompe utilisée pour la collision est située dans une plage allant de 40 MPa à 400 MPa, dans laquelle la collision s'effectue à une vitesse relative allant de Mach 0,7 à 7, et dans laquelle la teneur en un émulsifiant dans la boisson n'est pas supérieure à 5 ppm, et dans laquelle l'émulsifiant n'est pas l'huile de silicone.

14. Méthode de production d'une base de boisson comprenant une huile de silicone, une huile végétale, et de l'eau, la méthode comprenant les étapes de :

préparation d'un liquide comprenant l'huile végétale et l'huile de silicone ;
soumission du liquide à un traitement d'homogénéisation pour produire une dispersion liquide ; et
si nécessaire, ajout d'eau à la dispersion liquide, dans laquelle le traitement d'homogénéisation comprend le fait de causer la collision d'une partie du liquide avec une autre partie du liquide ou avec un autre objet, dans laquelle la pression de la pompe utilisée pour la collision est située dans une plage allant de 40 MPa à 400 MPa, dans laquelle la collision s'effectue à une vitesse relative allant de Mach 0,7 à 7, et dans laquelle la teneur en un émulsifiant dans la base de boisson n'est pas supérieure à 10 ppm, et dans laquelle l'émulsifiant n'est pas l'huile de silicone.

15. Méthode de production d'un arôme ou d'une liqueur de matière première comprenant une huile de silicone et une huile végétale ; la méthode comprenant les étapes de :

préparation d'un liquide comprenant l'huile végétale et l'huile de silicone ; et
soumission du liquide à un traitement d'homogénéisation pour produire une dispersion liquide, dans laquelle le traitement d'homogénéisation comprend le fait de causer la collision d'une partie du liquide avec une autre partie du liquide ou avec un autre objet, dans laquelle la pression de la pompe utilisée pour la collision est située dans une plage allant de 40 MPa à 400 MPa, dans laquelle la collision s'effectue à une vitesse relative allant de Mach 0,7 à 7, et dans laquelle la teneur en un émulsifiant dans l'arôme ou dans la liqueur de matière première n'est pas supérieure à 5 ppm, et dans laquelle l'émulsifiant n'est pas l'huile de silicone.

## REFERENCES CITED IN THE DESCRIPTION

**Patent documents cited in the description**

- JP 2014108104 A
- CN 105410849 B
- JP 2005247759 A

**Non-patent literature cited in the description**

- *On Analysis Methods, etc. for Nutrients, etc. Listed in the Nutrition Labelling Standards*, 26 April 1999 (13)